(19) Europäisches Patentamt / European Patent Office / Office européen des brevets

(11) **EP 4 016 467 B1**

(12) **EUROPEAN PATENT SPECIFICATION**

(45) Date of publication and mention
of the grant of the patent:
**31.12.2025 Bulletin 2026/01**

(21) Application number: **20923172.9**

(22) Date of filing: **09.11.2020**

(51) International Patent Classification (IPC):
**G06T 13/40** (2011.01)    **G06T 13/20** (2011.01)
**G06F 40/20** (2020.01)    **G06F 40/30** (2020.01)

(52) Cooperative Patent Classification (CPC):
**G06T 13/40; G06F 40/20; G06F 40/30;
G06T 13/205**

(86) International application number:
**PCT/CN2020/127484**

(87) International publication number:
**WO 2021/174898 (10.09.2021 Gazette 2021/36)**

(54) **METHOD AND DEVICE FOR COMPOSITING ACTION SEQUENCE OF VIRTUAL OBJECT**

VERFAHREN UND VORRICHTUNG ZUR KOMPOSITIONSAKTIONSSEQUENZ EINES
VIRTUELLEN OBJEKTS

PROCÉDÉ ET DISPOSITIF DE COMPOSITION DE SÉQUENCE D'ACTION D'OBJET VIRTUEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2020 CN 202010142920**

(43) Date of publication of application:
**22.06.2022 Bulletin 2022/25**

(73) Proprietor: **Tencent Technology (Shenzhen)
Company Limited
Shenzhen, Guangdong, 518057 (CN)**

(72) Inventors:
• **KANG, Di**
**Shenzhen, GUANGDONG 518057, (CN)**
• **LI, Jing**
**Shenzhen, GUANGDONG 518057, (CN)**
• **CHEN, Weidong**
**Shenzhen, GUANGDONG 518057, (CN)**
• **ZHANG, Wei**
**Shenzhen, GUANGDONG 518057, (CN)**
• **QIAO, Liang**
**Shenzhen, GUANGDONG 518057, (CN)**
• **BAO, Linchao**
**Shenzhen, GUANGDONG 518057, (CN)**

(74) Representative: **Novagraaf International SA
Chemin de l'Echo 3
1213 Onex, Geneva (CH)**

(56) References cited:
**CN-A- 1 949 274        CN-A- 104 484 034
CN-A- 106 548 503       CN-A- 108 986 186
CN-A- 111 369 687       US-A1- 2004 246 255
US-A1- 2018 322 670**

• **OSHITA M: "Generating Animation from Natural
Language Texts and Framework of Motion
Database", CYBERWORLDS, 2009. CW '09.
INTERNATIONAL CONFERENCE ON, IEEE,
PISCATAWAY, NJ, USA, 7 September 2009
(2009-09-07), pages 146 - 153, XP031542099,
ISBN: 978-1-4244-4864-7**
• **WENYU LU ET AL: "A Motion Retargeting Method
for Topologically Different Characters",
COMPUTER GRAPHICS, IMAGING AND
VISUALIZATION, 2009. CGIV '09. SIXTH
INTERNATIONAL CONFERENCE ON, IEEE,
PISCATAWAY, NJ, USA, 11 August 2009
(2009-08-11), pages 96 - 100, XP031552157, ISBN:
978-0-7695-3789-4**

EP 4 016 467 B1

- JIUN-YU KAO ET AL: "Graph-based approach for motion capture data representation and analysis", 2014 IEEE INTERNATIONAL CONFERENCE ON IMAGE PROCESSING (ICIP), IEEE, 27 October 2014 (2014-10-27), pages 2061 - 2065, XP032967001, DOI: 10.1109/ICIP.2014.7025413
- YISHENG CHEN ET AL: "Markerless monocular motion capture using image features and physical constraints", COMPUTER GRAPHICS INTERNATIONAL 2005 STONY BROOK, NY, USA JUNE 22-24, 2005, PISCATAWAY, NJ, USA,IEEE, 22 June 2005 (2005-06-22), pages 36 - 43, XP010830615, ISBN: 978-0-7803-9330-1, DOI: 10.1109/CGI.2005.1500365

**Description**

RELATED APPLICATION

The present disclosure claims priority to Chinese Patent Application No. 202010142920.2, entitled "METHOD AND DEVICE FOR SYNTHESIZING MOTION SEQUENCE OF VIRTUAL OBJECT" filed with the China National Intellectual Property Administration on March 4, 2020, which is incorporated herein by reference in its entirety.

FIELD OF THE TECHNOLOGY

The present disclosure relates to the service field of artificial intelligence, and more specifically, to a method, a device, and an apparatus for synthesizing a motion sequence of a virtual object and a computer-readable storage medium. The present disclosure further relates to a method for generating a video of a motion of a virtual object.

BACKGROUND OF THE DISCLOSURE

Currently, motions of virtual objects (for example, a virtual person, a virtual animal, a three-dimensional cartoon character, and the like) rely mainly on manual design of artists. Generally, an artist designs one or more motions (for example, running, jumping, walking, or the like of a virtual object r), and then store the motions and keywords of the motions correspondingly into a database. A computer reads motion description information of a virtual person, for example, reads "David jumps after walking for a while", then reads corresponding motion designs through keyword matching, and completes concatenating the motion designs to obtain a motion sequence of the virtual object "David". Document *"Generating Animation from Natural Language Texts and Framework of Motion Database"* (2009 International Conference on Cyber Worlds) by Masaki Oshita and patent document with publication No. US2004246255A1 each discloses a method for generating animation from user's input text.

SUMMARY

A method and a device for synthesizing a motion sequence of a virtual object, an electronic device, and a computer-readable storage medium are provided according to embodiments of the present disclosure.
A method for synthesizing a motion sequence of a virtual object is provided as defined in claim 1.
An apparatus for synthesizing a motion sequence of a virtual object is provided as defined in claim 10.
A computer-readable storage medium is provided as defined in claim 11

BRIEF DESCRIPTION OF THE DRAWINGS

In order to clarify technical solutions in embodiments, hereinafter briefly illustrated are drawings required for describing embodiments of the present disclosure. The following drawings only show exemplary embodiments of the present disclosure.

Figure 1 is a schematic diagram of a scenario of designing a motion sequence for a virtual object.

Figure 2A is a flowchart of a method for synthesizing a motion sequence of a virtual object according to an embodiment of the present disclosure.

Figure 2B is a schematic diagram of a method for synthesizing a motion sequence of a virtual object according to an embodiment of the present disclosure.

Figure 2C is a structural diagram of a device for synthesizing a motion sequence of a virtual object according to an embodiment of the present disclosure.

Figure 3A is a flowchart of constructing a library of continuous-motion clips according to an embodiment of the present disclosure.

Figure 3B is a schematic diagram of constructing a library of continuous-motion clips according to an embodiment of the present disclosure.

Figure 4 is a schematic diagram of determining a set of continuous-motion clips that is in a library of continuous-motion clips and that is similar to at least a part of motions in a motion sequence according to an embodiment of the present disclosure.

Figure 5 is a flowchart of a method for generating a video of a motion of a virtual object according to an embodiment of the present disclosure.

Figure 6 is a structural diagram of a device for synthesizing a motion sequence of a virtual object according to an embodiment of the present disclosure.

DESCRIPTION OF EMBODIMENTS

In order to make objectives, technical solutions, and advantages of the present disclosure more obvious, hereinafter exemplary embodiments of the present disclosure are illustrated in detail with reference to the accompanying drawings. Apparently, the described embodiments are merely some rather than all of embodiments of the present disclosure. The present disclosure is not limited to the exemplary embodiments described herein.

In specification and accompanying drawings, steps and elements that are substantially same or similar are indicated by identical or similar reference signs, and would not be repeatedly illustrated. In addition, herein the terms "first", "second", and the like are used merely for distinction and should not be construed as indicating or implying relative importance or sequence.

Hereinafter Relevant concept are described to facilitate description of the present disclosure.

Artificial Intelligence (AI) refers to a theory, a method, technology, or an application system, which simulates, extends, and expands human intelligence, perceives an environment, acquires knowledge, and utilizes knowledge, to obtain an optimal result via a digital computer or a machine controlled by a digital computer. In other words, the AI is a comprehensive technology of computer science, which attempts to understand essence of intelligence and produce a novel intelligent machine that can react in a manner similar to human intelligence. The AI aims at studying design principles and implementation methods of various intelligent machines, so as to render machines capable of perceiving, reasoning, and making decisions.

AI technology is a comprehensive discipline related to a wide range of fields, and includes techniques at levels of both hardware and software level. Basic AI technology generally includes techniques such as sensors, dedicated AI chips, cloud computing, distributed storage, big data processing, operation/interaction systems, and mechatronics. AI software technology mainly includes several major directions such as computer vision, speech processing, natural language processing, and machine learning (ML) or deep learning.

Nature language processing (NLP) is an important direction in the fields of computer science and AI. The NLP studies various theories and methods for implementing effective communication between human and computers through natural languages, and is a science that integrates linguistics, computer science, and mathematics. Therefore, research in the NLP concerns natural languages, that is, languages used by people in daily life, and the NLP is closely related to linguistic studies. Generally, NLP technology includes text processing, semantic understanding, machine translation, robot question and answering, knowledge atlas, and other techniques.

The ML is multi-field interdiscipline, and relates to multiple disciplines such as the probability theory, statistics, the approximation theory, convex analysis, and the theory of algorithm complexity. The ML specializes in studying how a computer simulates or implements human learning behaviors to obtain new knowledge or new skills, and how a computer reorganizes a structure of existing knowledge to keep improving its performances. The ML is a core of AI, is a fundamental way to make a computer intelligent, and is applied to various fields of AI. Generally, the ML and deep learning include techniques such as artificial neural networks, belief networks, reinforcement learning, transfer learning, inductive learning, and learning from instructions.

In embodiments of the present disclosure, each model may be an AI model, and particularly may be an AI-based neural network models. Generally, an AI-based neural network model is implemented as an acyclic graph in which neurons are arranged at different layers. Generally, a neural network model includes an input layer and an output layer, between which there is at least one hidden layer. The hidden layer transforms an input received from the input layer into a representation configured to generate an output at the output layer. A network node is fully connected to nodes at an adjacent layer via edges, and there is no edge between nodes at a same layer. Data received at a node of the input layer of the neural network propagates to a node of the output layer via any of: a hidden layer, an activation layer, a pooling layer, or a convolution layer. The input/output of the neural network model may be in various forms, which is not limited in the present disclosure.

The developing AI technology is studied and applied to lots of fields, such as common smart home, smart wearable devices, virtual assistants, smart speakers, smart marketing, unmanned driving, automatic driving, unmanned aerial vehicles, robots, smart medical care, and smart customer service. It is believed that the AI technology would be further applied to more fields and plays an increasingly important role with development.

Solutions of the present disclosure relate to technology such as AI, NLP, and ML, and would be specifically described in following embodiments.

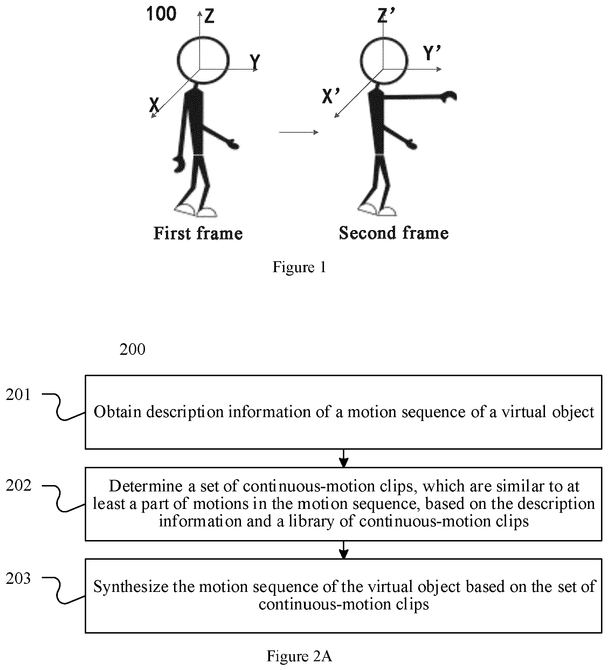

As a basis of a motion sequence, manual design of artists usually results in rigid motions of the virtual object, and presenting motions of virtual objects is excessively costly because large quantity of artists are required in the manual design. Figure 1 is a schematic diagram of a scenario 100 of designing a motion sequence for a virtual object.

Currently, motions of virtual objects (for example, a virtual person, a virtual animal, a three-dimensional cartoon character, or the like) rely mainly on manual design of artists. For example, it is assumed that an artist wants to design a motion of swinging arms for a virtual person "David" in Figure 1. The artists may design motion information of all moving portions (for example, the head, the left hand, the right hand, the left arm, the right arm, the left leg, and the right leg) of "David" within motion duration of swinging arms. The motion information includes three-dimensional coordinates, rotation angles, accelerations, and the like, of all moving portions in frames. For example, the three-dimensional coordinates of the head of "David" are (X, Y, Z) in the first frame, and are (X', Y', Z') in the second frame.

When the artists complete designing the motion of the virtual object "David" in each frame, the motion information is stored in correspondence to a name "swings arms" for such motion. The virtual object may have a large quantity of motions, which require a lot of artists to design, and hence designing a motion animation for the virtual object is excessively costly.

After completing the design of each single motion, a computing device reads motion description information of the virtual object "David", for example, "David swings arms after walking for a while", and then reads corresponding designed motions "walking" and "swings arms" through keyword matching, such that the corresponding motions are triggered. Thereby, concatenation and synthesis are implemented to acquire a motion sequence of the virtual object "David". A corresponding motion is triggered only when a keyword in the motion description information is completely identical to the motion name, and otherwise the virtual person "David" keeps stationary, which results in a rigid effect of the synthesis. For example, when the motion description information records "David swings two arms after walking for a while", "David" may keep stationary after walking for a while and does not have present swinging two arms in the final synthesized motions, because a motion library does not include a motion "swings two arms".

A method for synthesizing a motion sequence of a virtual object is provided according to embodiments of the present disclosure. In this method, motion information is extracted from real videos, which greatly reduces a workload of artists. In addition, a library of continuous-motion clips can be searched for a motion whose information is similar to a keyword in the motion description information. Hence, it is avoided that the synthesized motion of the virtual object is rigid.

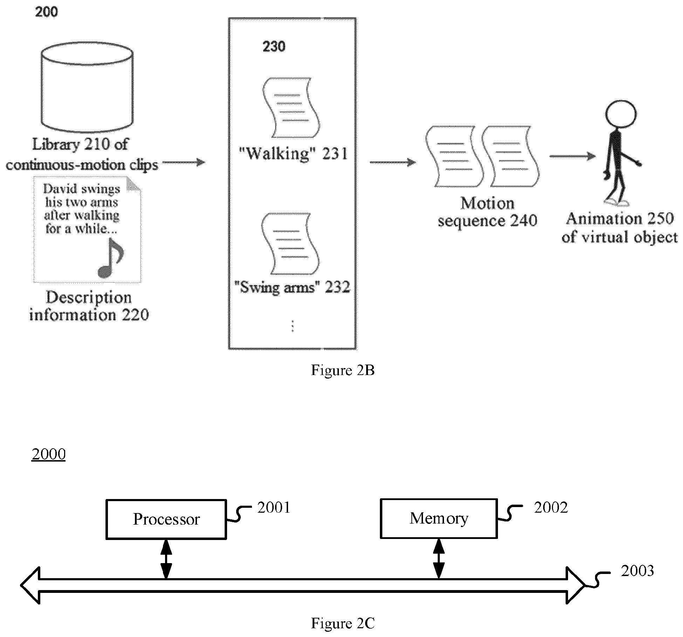

Figure 2A is a flowchart of a method 200 for synthesizing a motion sequence of a virtual object according to an embodiment of the present disclosure. Figure 2B is a schematic diagram of a method 200 for synthesizing a motion sequence of a virtual object according to an embodiment of the present disclosure. Figure 2C is a structural diagram of a device 2000 for synthesizing a motion sequence of a virtual object according to an embodiment of the present disclosure.

The method 200 for synthesizing a motion sequence of a virtual object according to embodiments of the present disclosure may be applied to any electronic device. The electronic device may be different types of hardware devices, for example, a personal digital assistant (PDA), an audio/video device, a mobile phone, a Moving Picture Experts Group Audio Layer III (MP3) player, a personal computer, a laptop computer, and a server. For example, the electronic device may be the device 2000 for synthesizing the motion sequence of the virtual object in Figure 2C. Hereinafter the present disclosure is described by taking the device 2000 as an example, and those skilled in the art can appreciate that the present disclosure is not limited thereto.

Reference is made to Figure 2C. The device 2000 may include a processor 2001 and a memory 2002. The processor 2001 and the memory 2002 may be coupled via a bus 2003.

The processor 2001 may perform various operations and processing according to a program stored in the memory 2002. Specifically, the processor 2001 may be an integrated circuit chip and has a capability of signal processing. The foregoing processor may be a general-purpose processor, a digital signal processor (DSP), an application-specific integrated circuit (ASIC), a field programmable gate array (FPGA) or another programmable logical device, discrete gate logical device, transistor logical device, or discrete hardware component, and may implement or perform methods, steps, and logic block diagrams that are disclosed in embodiments of the present disclosure. The general-purpose processor may be a microprocessor. Alternatively, the processor may be any conventional processor or the like, and may have the X87 architecture or the ARM architecture.

The memory 2002 stores computer instructions, and the computer instructions when executed by the processor implements the method 200. The memory 2002 may be a volatile memory or a non-volatile memory, or may include a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. In illustrative but not limitative descriptions, many forms of RAMs are available, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). The memory described herein aims to include but not limited to the above memories and may be of any other suitable type.

Reference is made to Figure 2A. In operation 201, the device 2000 may obtain description information of a motion sequence of a virtual object.

The virtual object includes a virtual person, a virtual animal, a three-dimensional cartoon character, and the like. A motion sequence of the virtual object may include motion information of all moving portions of the virtual object in each frame of a video or in another form for presentation. The motion information includes at least one of: a position, speed, or acceleration of the moving portions. For a virtual person, the moving portions may include moving joints such as the head, the two hands, and the elbows. For a virtual animal, the moving portions may include moving joints such as four limbs and a tail. The motion information may be stored as a 3D pose. A type of the virtual object and a type of the moving portions are not limited herein.

The description information of the motion sequence of the virtual object may be description information 220 as shown in Figure 2B. The description information 220 may record motions of the virtual object in a period in a form of text, for example, "David swings his two arms after walking for a while" as shown in Figure 2B. Additionally, the description information 220 may describe the motions of the virtual object in the form of an audio. For example, the description information 220 may describe a mood related to the motions of the virtual object by using apiece of exciting music, or describe a rhythm of the motions of the virtual object with drum beats. When the description information 220 is an audio, the description information 220 may include a dialog of the virtual object, a narration of a scene, or the like. The form of the description information 220 is not limited in the present disclosure.

In operation 202, the device 2000 determines a set of continuous-motion clips, which are similar to at least a part of motions in the motion sequence, based on the description information and a library of continuous-motion clips.

Reference is made to Figure 2B. The device 2000 may determine a set 230 of continuous-motion clips, which are similar to the at least some motions in the motion sequence, from the library 210 of continuous-motion clips in various manners. For example, the device 2000 may compare any semantic information (for example, a title, a subtitle, or motion description) or motion attribute information (for example, a rhythm of a motion or a rhythm related to a motion) of each continuous-motion clip in the library 210 of continuous-motion clips with a segment (part) of the description information 220. The device 2000 may calculate similarity between them, and then select k continuous-motion clips having highest similarities as the set 230 of continuous-motion clips, where k is an integer greater than 0. As shown in Figure 2B, the set 230 of continuous-motion clips may include multiple continuous-motion clips, for example, continuous-motion clips 231 and 232.

In embodiments of the present disclosure, operation 202 may further include following steps. A representation vector of the motion sequence of the virtual object is acquired based on the description information, where semantic information and motion attribute information of the motion sequence are fused in the representation vector. The set of continuous-motion clips, which are similar to each motion in the motion sequence and which are in the library of continuous-motion clips, are determined based on the representation vector of the motion sequence of the virtual object.

The representation vector of the motion sequence of the virtual object is a multimodal representation vector. The modality may indicate a source or a form of information. For example, the description information 220 includes not only text information but also audio information, and the audio information, the text information, or the like in the description information 220 are called a modality.

Different modalities have different statistical characteristics, and include different information. For example, the audio information is usually expressed as a frequency, amplitude, a timbre, or the like, while the text information is usually expressed as discrete words or sentences. Therefore, the device 2000 may extract different features from the audio information and text information in the description information 220, respectively, and perform fusion and correlation analysis on the features, such that a feature of the description information 220 can be better represented.

In order to obtain the representation vector of the description information 220, the device 2000 may extract motion attribute information from the audio information in the description information 220. The motion attribute information includes at least one of a rhythm of a motion or a mood related to a motion of the virtual object. In an embodiment, the motion attribute information may be a representation vector in which the motion rhythm and the motion mood of the virtual object are fused. For example, the device 2000 may convert the audio information of the description information 220 into a representation vector of an audio feature of the description information 220 through the Vggish model. The device 2000 parses the audio information to construct the Mel-Frequency Cepstral Coefficients (MFCC) feature or the Log-Mel feature, which represents the audio information. In an embodiment, the device 2000 may further perform temporal fusion on the MFCC feature or Log-Mel feature to construct a representation vector that is more representative. It is appreciated that the device 2000 may alternatively obtain the representation vector of the audio information of the description information 220 through another neural network model. The present disclosure is not limited to thereto.

In order to obtain the representation vector of the description information 220, the device 2000 may extract semantic information from the text information in the description information 220. The device 2000 may further parse the modal information in the form of text (for example, "David swings two arms after walking for a while" in Figure 2B) to obtain the semantic information of the description information 220, and then convert it into a representation vector for description information 220. F or example, the device 2000 can segment the text information of the description information 220 into multiple words using the Bidirectional Encoder Representations from Transformers (BERT) algorithm, then converts the words into word vectors through word embedding, and finally concatenate the word vectors together as the representation vector of description information 220. An encoding neural network model (an encoder) in the BERT algorithm can convert the word vectors into encoded hidden state vectors. In some embodiments, the encoding neural network model may be implemented as a long short-term memory neural network model, and may alternatively be implemented as any neural network model that can encode a word vector to obtain an encoded hidden state vector. Through the BERT algorithm, the device 2000 can extract natural language features, which are context-related, from the description information 220. Such algorithm maps words into word vectors, so that the words that are similar in semantics correspond to similar word vectors. It is appreciated that the device 2000 may alternatively obtain the representation vector of the semantic information of the description information 220 through another neural network model. The present disclosure is not limited to thereto.

The the description information 220 includes both text information and audio information. In such case, a representation vector of the text information and a representation vector of the audio information may be complementary and redundant in view of each other. The device 2000 can further process the two representation vectors of the description information 220 in various manners, so as to obtain a representation vector that can represent the two kinds of information. Generally, a process of digitizing features included in data of multiple modalities into a real-value vector is called multimodal representation. The multimodal representation may include fusion multimodal representation and deep multimodal representation. Fusion multimodal representation may refer to integrating (for example, simply concatenating) features of different modalities into a single vector, and the integrated single vector may be referred to as a fused multimodal-representation vector. A vector obtained by further analyzing the fusion multimodal-representation vector may be called a deep multimodal-representation vector. For example, the fused multimodal-representation vector of the description information 220 may be further abstracted into a vector of a higher level via the neural network model, which is the deep multimodal-representation vector. The deep multimodal-representation vector may be a multidimensional vector of floating-point numbers, for example, a 128-bit floating-point vector. The representation vector disclosed herein may be the fused multimodal-representation vector or the deep multimodal-representation vector. Specific representation of the representation vector of the description information 220 is not limited herein.

The deep multimodal-representation vector represents the description information 220 in the form of a vector, and carries information on the multiple modalities. Hence, a continuous-motion clip can be retrieved faster and more accurately by using the deep multimodal representation vector, facilitating acquiring the set 230 of continuous-motion clips.

The library 210 of continuous-motion clips is constructed based on video materials. The video materials may be existing movies, existing TV dramas, existing video clips, or the like. The video materials may be online. The device 2000 extracts motion information of one or more continuous motions of a moving object (for example, a live actor) from the video materials, to construct the library 210 of continuous-motion clips. For example, a continuous motion includes a motion of a moving object when taking a complete step, a motion lasting from jumping to landing, or the like. The continuous-motion clip has motion information of the complete continuous motion. It is appreciated that continuous motions may have identical or different durations, which is not limited in the present disclosure.

Each continuous-motion clip in the library 210 of continuous-motion clips has a unique identifier of such continuous-motion clip, motion information of such continuous-motion clip, and a representation vector corresponding to such continuous-motion clip. The representation vector corresponding to the continuous-motion clip may be the fused multimodal-representation vector or the deep multimodal-representation vector, in which the motion attribute information, the semantic information, and/or even screen information of the video material in such clip. The motion attribute information and the semantic information are extracted from audio data and text data, respectively, of the video materials. Figure 2B shows two continuous-motion clips in the set 230 of continuous-motion clips schematically. For example, semantic information "walking" and motion attribute information (that is, a motion rhythm, a motion mood, and the like, of a walking moving object) are fused in a representation vector of the continuous-motion clip 231. For example, semantic information "swings hands" is fused in a representation vector of the continuous-motion clip 232.

Therefore, the device 2000 may compare a representation vector of each segment (part) of the motion sequence, which in the representation vector of the motion sequence of the virtual object, with a representation vector corresponding to each continuous-motion clip in the library 210 of continuous-motion clips. A smaller distance between the two representation vectors represents a higher similarity between the two representation vectors. Therefore, the set 230 of continuous-motion clips, which are similar to at least a part of the motions in the motion sequence of the virtual object, can be obtained.

In operation 203, the device 2000 synthesizes the motion sequence of the virtual object based on the set of continuous-motion clips.

The motion sequence of the virtual object can be represented by the motion information in the continuous-motion clips 231 and 232, in a case that the motion information of all motions in the motion sequence described by the description information 220 is similar to that of the continuous-motion clip 231 plus 232. Therefore, the device 2000 can infer, based on the set 230 of continuous-motion clips, that the motion information of the description information 220 "David swings his two arms after walking for a while" includes motion information in "walking" and "swings hands". The device 2000 may concatenate the set 230 of continuous-motion clips according to a temporal order indicated by the motion sequence of the virtual object, to obtain the synthesized motion sequence of the virtual object.

In an embodiment, the device 2000 may retarget the synthesized motion to any virtual object, such as a virtual newscaster, a virtual game broadcaster, a virtual concierge, or a virtual shopping guide. The retargeting, particularly motion retargeting, refers to a process of copying motion information from a source character onto another character, that is, a target character, when the two characters are different in a size or a proportion (for example, among the hands, the legs, and the trunk). For example, an actor whose height is 1.6m is walking in a video material, while the target virtual object may be a virtual concierge whose height is 1.8m. Therefore, motion information of the actor needs to be altered to fit a motion state of the virtual greeter better. In motion retargeting a motion of a set of bones may migrate to another set of bones under constraints, and lengths and proportions of the two sets of bones may be different. Generally, the constraints are, for example, that the feet need to be on the ground, and rotation angles of some bones do not exceed some thresholds.

In the method 200, the motion information is estimated from the video materials to address an issue that motions of a virtual object rely on artists. The method 200 may utilize a large amount of video data from the Internet, even online video data, and hence the library 210 of continuous-motion clips is enriched and less likely to have repeated content. Comparison is performed based on the representation vector in which the semantic information and the motion attribute information are fused. Thereby, a rhythm exhibited by the synthesized motion sequence does not only match semantic meaning in text data but also a rhythm and mood of a speech, and the synthesized motion sequence is more natural. The method 200 may implement that, for example, the hands moves up and down for once every time a word is spoken by a virtual broadcaster who slows down a speech and emphasizes a specific phrase. In the method 200, the library 210 of continuous-motion clips is searched for motions whose information is similar to a keyword in the motion description information, so that more candidate continuous-motion clips can be obtained. It is avoided that the synthesized virtual object is in a rigid stationary state most of the time, and thereby a more flexible simulation effect is achieved in an application scenario of virtual reality.

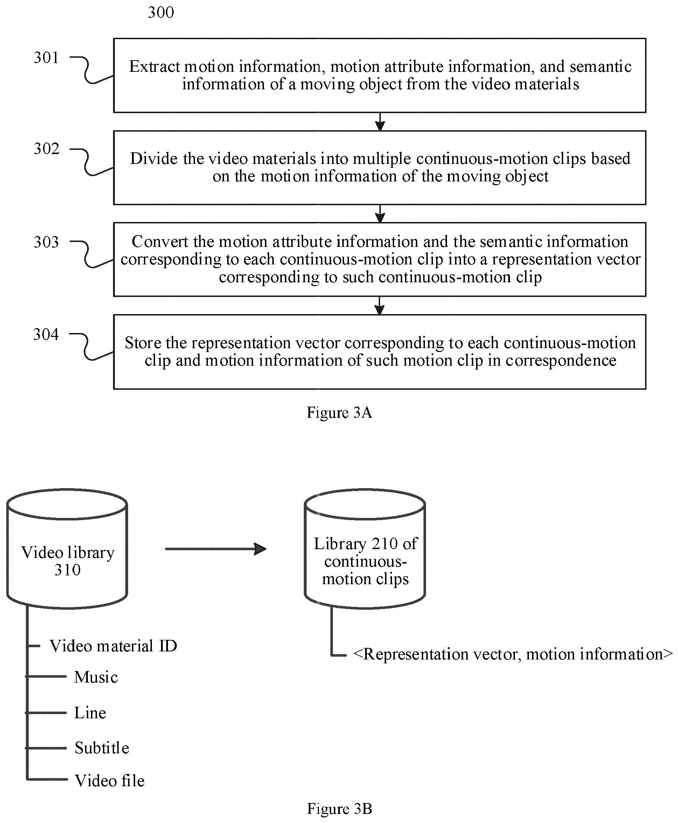

Figure 3A is a flowchart of operations 300 for constructing a library of continuous-motion clips according to an embodiment of the present disclosure. Figure 3B is a schematic diagram of constructing a library of continuous-motion clips according to an embodiment of the present disclosure.

Reference is made to Figure 3B. A video library 310 includes video information of multiple video materials. Video information of each video material includes a unique identifier (ID), music, lines, subtitles, a video file, or the like, of the video material. The video library 310 may be a relationship database storing the video information.

Representation vectors of the continuous-motion clips may serve as keys, motion information of the continuous-motion clips may serve as values, such that construct key-value pairs are constructed in the library 210. Thereby, the library 210 of continuous-motion clips can store the representation vectors and the motion information of the continuous-motion clips in correspondence. The library 210 of continuous-motion clips may be an Approximate Nearest Neighbor (ANN) retrieval database. In the ANN retrieval database, one or more pieces of data similar to a target key (for example, the representation vector of the motion sequence of the virtual object) can be quickly retrieved through ANN retrieval. Specifically, the ANN retrieval may utilize a characteristic of clustered distribution formed by massive data, and classify or encode the representation vectors corresponding to the continuous-motion clips in the library 210 through a data clustering analysis. Further, a data category to which a query key belongs can be predicted according to the query key, and some or all items in the predicted category serve as a result of the query. In an embodiment, the library 210 of continuous-motion clips may be constructed as an ANN retrieval library by using tools such as Annoy™ and Faiss™. In is appreciated that the ANN retrieval library may alternatively be constructed using another tool, which is not limited herein. The library 210 of continuous-motion clips may alternatively be a database of another type, for example, a classic relationship database.

The library 210 of continuous-motion clips and the video library 310 are shown as separate libraries in Figure 3B. Those skilled in the art can appreciate that the library 210 of continuous-motion clips may be a database generated according to video library 310, or the library 210 of continuous-motion clips may be a part of the video library 310, as long as the library 210 of continuous-motion clips is capable to store corresponding information.

The device 2000 may perform operations 301 to 304, as shown in Figure 3A, to construct the library 210 of continuous-motion clips from the video library 310.

Reference is made to Figure 3A. In operation 301, the device 2000 may extract motion information, motion attribute information, and semantic information of a moving object from the video materials. As stated above, the motion information includes at least one of: positions, speed, or acceleration of the moving portions. The motion attribute information may include at least one of: a rhythm of a motion or a mood related to a motion of the moving object. The motion attribute information and the semantic information are extracted from audio data and text data, respectively, of the video materials. The motion information is extracted from screen data in the video materials. For example, the device 2000 can estimate three-dimensional coordinates of moving portions (for example, human joints such as the head, the hands, and the elbows) in each frame of a video material. Then, the device 2000 can estimate parameters, such as a rotation angle, acceleration (including rotation acceleration and linear acceleration), and speed, of a moving portion during two or more adjacent frames according to the three-dimensional coordinates of the moving portion.

In an embodiment, the operation 301 may further include following steps. Dimension reduction is performed on the extracted motion information of the moving object. For example, the device 2000 may perform the dimension reduction on features, such as the positions, the speed, and the acceleration, of each human joint estimated from the video through a principal components analysis (PCA) algorithm. Hence, only important components in the motion information are retained while noise is discarded, so that the extracted motion information is smoother and more stable.

In addition, the semantic information and the motion attribute information may be represented by a representation vector in a manner described in Figure 2A and Figure 2B. The representation vector presents information concerning a temporal order.

In operation 302, the device 2000 divides the video materials into multiple continuous-motion clips based on the motion information of the moving object. Duration of a video may be as short as a few minutes or as long as a few hours. In a case that the duration is too long (including too many frames), it is usually difficult that the semantic meaning, the rhythm, or the like in the corresponding motion information meet a requirement throughout the video, and there may be a large amount of calculation, which is inconvenient to perform similarity comparison on features. In order to facilitate synthesis, the device 2000 may divide the motion information that includes too many frames into multiple parts, each of which includes fewer frames, according to motions. These parts correspond to the continuous-motion clips. Each continuous-motion clip includes motion information of a moving object during a complete motion, for example, a motion from jumping to landing. Thereby, the device 2000 can find a motion matching the rhythm and semantic meaning more easily, and then synthesize motions that are more diversified.

In an embodiment, the operation 302 may include following steps. A motion state of the moving object in each frame of the video material is determined. In a case that the motion state of the moving object is being stationary in at least one frame, the at least one frame serves as a splitting point for dividing the video material into the multiple continuous-motion clips. For example, the device 2000 can train a support vector machine (SVM) classifier to determine whether the virtual object in each frame is moving or stationary. The SVM classifier can classify input information through a supervised ML algorithm. When the virtual object of a frame is in a stationary state, the frame may be considered as a specific frame. Then, the device 2000 may determine that multiple frames located between two adjacent specific frames constitute a complete motion. Alternatively, the device 2000 may preset a motion-reference frame.

Such frame represents a starting state and a finishing state of a complete motion (assuming that the starting state and the finishing state of a motion are identical, for example, both the starting state and the finishing state of jumping are "standing still"). Then, the device 2000 may compare motion information of each frame with that of the motion-reference frame. In a case that the $n^{th}$ frame and the $(n+k)^{th}$ frame are both similar to the motion information of the motion-reference frame, it may be determined that multiple frames ranging from the $n^{th}$ frame to the $(n+k)^{th}$ frame constitute a complete motion. Alternatively, the device 2000 may combine the foregoing two manners. For example, when bouncing upward, there may be a frame in which a person has not fell onto the ground and of which the motion information is identical or similar to the motion information of the motion-reference frame. In such case, the classification between the stationary state and the moving state may be applied to determine that the person is still moving, that is, a motion has not been completed. Hence, a better classification result can be obtained by combining the two manners. Those skilled in the art can appreciate that the video materials may be divided in various other manners, which is not limited herein.

In the operation 303, the device 2000 may convert the motion attribute information and the semantic information corresponding to each continuous-motion clip into a representation vector corresponding to such continuous-motion clip. The device 2000 may divide the motion sequence, along with its corresponding semantic information and motion attribute information, into multiple parts according to the result of the forgoing classification, and associate such parts with motion information. In an embodiment, the representation vector representing the semantic information and the motion attribute information in a video material can be divided into multiple representation vectors according to the foregoing manner of classification. Each representation vector corresponding to one continuous-motion clip, and semantic information and motion attribute information of the continuous-motion clip are fused into such representation vector.

In operation 304, the device 2000 store the representation vector corresponding to each continuous-motion clip, a unique identifier of such motion clip, and motion information of such motion clip in correspondence. For example, all aforementioned information is stored with correspondence in the library 210 of continuous-motion clips.

Therefore, the device 2000 is capable to obtain the library 210 of continuous-motion clips quickly through operations 301 to 304.

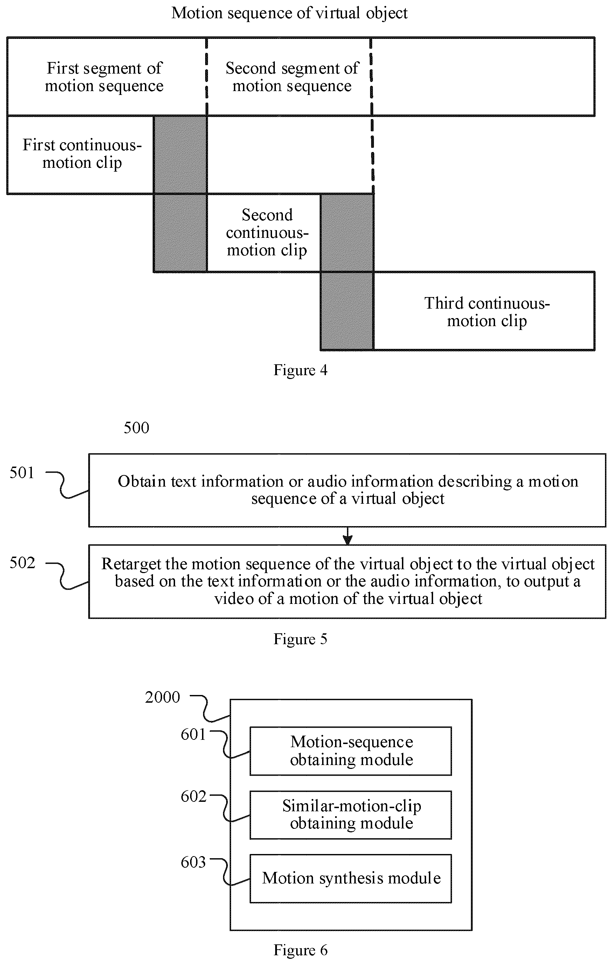

Figure 4 is a schematic diagram of determining a set of continuous-motion clips which are similar to at least a part of motions of a motion sequence, from a library of continuous-motion clips according to an embodiment of the present disclosure.

For example, reference is made to Figure 4. The device 2000 may obtain a representation vector of a first segment (part) of a motion sequence based on a representation vector of the motion sequence of the virtual object. Then, the device 2000 obtains a first continuous-motion clip based on the representation vector of the first segment. A representation vector of the first continuous-motion clip has a first similarity to the representation vector of the first segment. The first similarity is greater than or equal to a similarity between a representation vector of any other continuous-motion clip in the library of continuous-motion clips and the representation vector of the first segment.

For example, it is assumed that the library 210 of continuous-motion clips includes 100 continuous-motion clips. Duration of the continuous-motion clips, or a quantity of frames presented in the continuous-motion clips, may be different. When obtaining the first segment of the motion sequence, the device 2000 may cut a representation vector, which has duration identical to that of a continuous-motion clip in the library 210, from the representation vector of the motion sequence of the virtual object, as a representation vector of a candidate segment A of the motion sequence. Then, the device may calculate a similarity A' between the representation vector of the candidate segment A and a representation vector of such continuous-motion clip. Afterwards, the device 2000 may cut another representation vector, which has duration identical to that of another continuous-motion clip, from the representation vector of the motion sequence of the virtual object, as a representation vector of a candidate segment B of the segment. Then, the device 2000 may calculate a similarity B' between the representation vector of the candidate segment B and a representation vector of the other continuous-motion clip. The device 2000 compares the similarity A' and the similarity B' to select a segment with a higher similarity, and continues to compare the selected segment with still another candidate segment of the motion sequence, until such comparison has performed on all of the 100 continuous-motion clips. Thereby, the continuous-motion clip having the highest similarity is selected as the first continuous-motion clip. In a case that continuous-motion clips with different duration have the same similarity to their respective candidate segments, the one with a shorter duration is selected as the first continuous-motion clip.

Afterwards, the device 2000 may obtain a representation vector of a second segment (part) of the motion sequence based on the representation vector of the motion sequence of the virtual object. The second segment refers to a segment of the motion sequence which is immediately subsequent to the first segment. Then, the device 2000 may obtain a second continuous-motion clip based on motion information of multiple tail frames of the first continuous-motion clip and the representation vector of the second segment. A representation vector of the second segment has a second similarity to the representation vector of the second segment of the motion sequence, and the second similarity is greater than or equal to a similarity between the representation vector of any other continuous-motion clip in the library of continuous-motion clips and the representation vector of the second segment. As shown in Figure 4, the gray part of the first continuous-motion clip represents n tail frames of the first continuous-motion clip. It is assumed that the representation vector of the first continuous-motion clip is quite similar to that of a segment ranging from the 1st frame to the $k^{th}$ frame of the motion sequence of the virtual object. In such case, when obtaining the second continuous-motion clip, the device 2000 may cut the representation vector of the motion sequence of the virtual object, which starts from the $(k-n)^{th}$ frame, to obtain a candidate segment of the motion sequence for obtaining the second continuous-motion clip. For example, it is assumed that a candidate segment C, which has duration identical to a continuous-motion clip and includes m frames, needs to be cut from the motion sequence for obtaining the second continuous-motion clip. In such case, a representation vector representing the $(k-n)^{th}$ frame to the $(k-n+m)^{th}$ frame may be cut from the representation vector of the motion sequence of the virtual object. The device 2000 may obtain the second continuous-motion clip in a manner similar to that of obtaining the first continuous-motion clip.

The present disclosure is not limited to the foregoing manner of obtaining the first continuous-motion clip and the second continuous-motion clip. For example, the device 2000 may alternatively compress the continuous-motion clips in the library 210 to have the same duration, and then compare them with the representation vector of the segment of the motion sequence which has a fixed duration. Moreover, the device 2000 may search for the first continuous-motion clip and the second continuous-motion clip by utilizing characteristics of a neighbor-search library.

After obtaining the set 230 of continuous-motion clips, the device 2000 may concatenate the continuous-motion clips in the set 230. The concatenation includes fusing motion information of multiple tail frames of a continuous-motion clip, which is immediately previous to a current continuous-motion clip, and motion information of multiple head frames of the current continuous-motion clip. For example, the device 2000 may perform weighted averaging on rotation angles of n tail frames of each continuous-motion clip and n head frame of a continuous-motion clip immediately subsequent to said continuous-motion clip, so that the synthesized motion is smooth in transition between different continuous-motion clips. n is an even number. For example, it is assumed that the first continuous-motion clip represents a motion lasting from the $i^{th}$ frame to the $(i+11)^{th}$ frame in the motion sequence of the virtual object, and the second continuous-motion clip represents a motion from the $(i+11-n)^{th}$ frame to the $(i+11-n+12)^{th}$ frame in the motion sequence of the virtual object. In order to smooth the transition between the two continuous-motion clips, the device fuses motion information representing n frames, i.e. from the $(i+11-n)^{th}$ frame to the $(i+11)^{th}$ frame in the motion sequence of the virtual object, in the first continuous-motion clip with motion information representing such n frames in the second continuous-motion clip. For example, the device 2000 may calculate an output rotation angle $Rot^x_{output}$ of each moving portion in the $x^{th}$ frame for the current continuous-motion clip based on a following equation.

$$Rot^x_{output} = Rot^x_{seg1} \times \frac{e^{-x}}{1+e^{-x}} + Rot^x_{seg2} \times \frac{1}{1+e^{-x}}$$

$Rot^x_{seg1}$ is a vector representing motion information of virtual object in the n frames from a view of the previous continuous-motion clip. Motion information of each moving portion may be represented by a rotation angle. For example, each element in the vector $Rot^x_{seg1}$ represents a rotation angle of a specific joint of a human body. $Rot^x_{seg2}$ represents a rotation angle of each moving portion in the $n$ frames from a view of the current motion clip. x ranges from $\left[-\frac{n}{2}, \frac{n}{2}\right]$. For example, it is assumed that the current continuous-motion clip is the second continuous-motion clip, and a case in which x = 0 is studied. $Rot^x_{seg1}$ is a rotation angle of each moving portion of the virtual object in the $(11-0.5*n)^{th}$ frame of the first continuous-motion clip, i.e. represents motion information of the $(i+11-0.5*n)^{th}$ frame in the motion sequence of the virtual object when the first continuous-motion clip serves as the similar clip. $Rot^x_{seg2}$ is a rotation angle of each moving portion of the virtual object in the $(0.5*n)^{th}$ frame of the second continuous-motion clip, i.e. represents motion information of the $(i+11-0.5*n)^{th}$ frame in the motion sequence of the virtual object when the second continuous-motion clip serves as the similar clip. Substituting x = 0 into the foregoing equation, the rotation angle of the $(i+11-0.5*n)^{th}$ frame in the motion sequence of the virtual object is obtained as $Rot^x_{output} = Rot^x_{seg1} \times 0.5 + Rot^x_{seg2} \times 0.5$.

The above equation performs weighted averaging on the rotation angles of $n$ tails frames in the previous continuous-motion clip and n head frames of the current continuous-motion clip. As x increases, the weight of the previous continuous-motion clip decreases, while the weight of the current continuous-motion clip increases.

Figure 5 is a flowchart of a method 500 for generating a video of a motion of a virtual object according to an embodiment of the present disclosure.

In operation 501, the device 2000 may obtain text information or audio information describing a motion sequence of a virtual object. The text information or the audio information describing the motion sequence of the virtual object may be the description information 220 illustrated in the method 200. For example, the text information may be "David swings two arms after walking for a while". The description information may describe a mood related to a motion of the virtual object through a piece of exciting music, or describe a rhythm of a motion of the virtual object through drum beats.

In operation 502, the device 2000 may retarget the motion sequence of the virtual object to the virtual object based on the text information or the audio information, to output a video of a motion of the virtual object.

The video of motion of the virtual object is synthesized based on a set of continuous-motion clips, which are from a library of continuous-motion clips and which are similar to at least a part of motions in the motion sequence, the library being constructed with video materials. Each continuous-motion clip in the library of continuous-motion clips includes a unique identifier of such continuous-motion clip, motion information of such continuous-motion clip, and a representation vector corresponding to such continuous-motion clip. Similar to the method 200, the device 2000 may convert the text information or the audio information into a representation vector of the motion sequence of the virtual object, and then retrieve a set 230 of similar continuous-motion clips from the library 210. After performing concatenation on the set 230 of continuous-motion clips, the device 2000 obtains the motion sequence of the virtual object.

The device 2000 may retarget the synthesized motion to any virtual object, such as a virtual newscaster, a virtual game broadcaster, a virtual concierge, or a virtual shopping guide. The retargeting may copy motion information from a source character onto another character, that is, a target character, when the two characters are different in a size or a proportion (for example, among the hands, the legs, and the trunk). For example, an actor whose height is 1.6m is walking in a video material, while the target virtual object may be a virtual concierge whose height is 1.8m. Therefore, motion information of the actor needs to be altered to fit a motion state of the virtual greeter better. In motion retargeting a motion of a set of bones may migrate to another set of bones under constraints, and lengths and proportions of the two sets of bones may be different. Generally, the constraints are, for example, that the feet need to be on the ground, and rotation angles of some bones do not exceed some thresholds. After the retargeting, the video of the motion of the virtual object can be outputted.

The method 500 can output the motion video, which conforms to semantic information from text information or motion attribute information from audio information, for the virtual object on a basis of only the text information or the audio information. The motion of the virtual object in the video is natural and not rigid.

Figure 6 is a structural diagram of a device 2000 for synthesizing a motion sequence of a virtual object according to an embodiment of the present disclosure.

The device 2000 may include a motion-sequence obtaining module 601, a similar-motion-clip obtaining module 602, and a motion synthesis module 603.

The motion-sequence obtaining module 601 may be configured to obtain description information of a motion sequence of a virtual object. The virtual object includes a virtual person, a virtual animal, a three-dimensional cartoon character, and the like. The motion sequence of the virtual object may include motion information of all moving portions of the virtual object in each frame of a video or in another form for presentation. The motion information includes at least one of: positions, speed, or acceleration of the moving portions.

The similar-motion-clip obtaining module 602 may be configured to determine a set of continuous-motion clips, which are similar to at least a part of motions in the motion sequence, based on the description information and a library of continuous-motion clips, the library being constructed with video materials. In an embodiment, the similar-motion-clip obtaining module 602 may be further configured to: obtain a representation vector of the motion sequence of the virtual object based on the description information, where semantic information and motion attribute information of the motion sequence are fused in the representation vector; and determine the set of continuous-motion clips, which are from the library of continuous-motion clips and which are similar to at least the part of motions in the motion sequence, based on the representation vector of the motion sequence of the virtual object. Each continuous-motion clip in the library of continuous-motion clips includes a unique identifier of such continuous-motion clip, motion information of such continuous-motion clip, and a representation vector corresponding to such continuous-motion clip.

The motion synthesis module 603 may be configured to synthesize the motion sequence of the virtual object based on the set of continuous-motion clips. In an embodiment, the device 2000 may retarget the synthesized motion to any virtual object, such as a virtual newscaster, a virtual game broadcaster, a virtual concierge, or a virtual shopping guide. The retargeting, particularly motion retargeting, refers to a process of copying motion information from a source character onto another character, that is, a target character, when the two characters are different in a size or a proportion (for example, among the hands, the legs, and the trunk). For example, an actor whose height is 1.6m is walking in a video material, while the target virtual object may be a virtual concierge whose height is 1.8m. Therefore, motion information of the actor needs to be altered to fit a motion state of the virtual greeter better. In motion retargeting a motion of a set of bones may migrate to another set of bones under constraints, and lengths and proportions of the two sets of bones may be different. Generally, the constraints are, for example, that the feet need to be on the ground, and rotation angles of some bones do not exceed some thresholds.

The device 2000 estimates the motion information from the video materials, and thereby addresses an issue that motions of a virtual object rely on artists. The device 2000 may search the library of continuous-motion clips for a motion whose information is similar to a keyword in the motion description information. Thereby, more candidate continuous-motion clips can be obtained, and it is avoided that the synthesized virtual object is stationary and rigid in most time. A simulation effect is more flexible in an application scenario of virtual reality.

An apparatus for synthesizing a motion sequence of a virtual object is provided according to an embodiment of the present disclosure provides. The apparatus includes a processor and a memory.

The memory stores computer instruction. The computer instructions, when executed by the processor, configure the apparatus to implement the method 200 and/or the method 500.

A computer-readable storage medium is provided according to an embodiment of the present disclosure. The computer-readable storage medium stores computer instructions. The computer instructions, when executed by a processor, configure an electronic device including the processor to implement the method 200 and/or the method 500.

In the method 200 and the method 500 according to the embodiments of the present disclosure, the motion information is estimated from the video materials to address an issue that motions of a virtual object rely on artists. The foregoing methods may utilize a large amount of video data from the Internet, even online video data, and hence the library of continuous-motion clips is enriched and less likely to have repeated content. Comparison is performed based on the representation vector in which the semantic information and the motion attribute information are fused. Thereby, a rhythm exhibited by the synthesized motion sequence does not only match semantic meaning in text data but also a rhythm and mood of a speech, and the synthesized motion sequence is more natural. The methods 200 and 500 may implement that, for example, the hands moves up and down for once every time a word is spoken by a virtual broadcaster who slows down a speech and emphasizes a specific phrase. In the method 200, the library 210 of continuous-motion clips is searched for motions whose information is similar to a keyword in the motion description information, so that more candidate continuous-motion clips can be obtained. It is avoided that the synthesized virtual object is in a rigid stationary state most of the time, and thereby a more flexible simulation effect is achieved in an application scenario of virtual reality.

Flowcharts and block diagrams in the drawings illustrate architecture, functions, and operations which may be implemented through the system, the method, and the computer program product according to various embodiments of the present disclosure. Accordingly, each box in a flowchart or a block diagram may represent a module, a program segment, or a part of codes. The module, the program segment, or the part of codes includes one or more executable instructions used for implementing designated logic functions. In some alternative embodiments, functions described in boxes may occur in a sequence different from that as shown in the drawings. For example, in practice, content of two succeeding boxes may be performed substantially in parallel, and sometimes event in a reverse sequence, which is determined based on concerned functions. Further, each box in a block diagram and/or a flowchart, and a combination of boxes in the block diagram and/or the flowchart, may be implemented through a dedicated hardware-based system configured to perform functions or operations that are specified, or may be implemented through a combination of dedicated hardware and computer instructions.

In general, various exemplary embodiments of the present disclosure can be implemented through hardware, a dedicated circuit, software, firmware, logic, or any combination thereof. Some aspects may be implemented in hardware, while other aspects may be implemented in firmware or software executable by a controller, a microprocessor, or other computing devices. When various aspects of the embodiments of the present disclosure have been illustrated or described as block diagrams, flowcharts, or represented by some other graphs, it is appreciated that the blocks, apparatuses, systems, technologies, or methods described herein may be implemented, as non-restrictive examples, through hardware, software, firmware, a dedicated circuit, a dedicated logic, general-purpose hardware, a controller or another computing device, or some combinations thereof.

The forgoing exemplary embodiments of the present disclosure, which are described in detail, are illustrative instead of limitative.

## Claims

1. A computer-implemented method for synthesizing a motion sequence of a virtual object, comprising:

> obtaining (201) description information of a motion sequence of a virtual object;
> determining (202) a set of continuous-motion clips, which are similar to at least a part of motions in the motion sequence, based on the description information and a library of continuous-motion clips, the library being constructed with video materials; and
> synthesizing (203) the motion sequence of the virtual object based on the set of continuous-motion clips;
> wherein each continuous-motion clip in the library of continuous-motion clips comprises a unique identifier of said continuous-motion clip, motion information of said continuous-motion clip, and a representation vector corresponding to said continuous-motion clip; and
wherein determining the set of continuous-motion clips comprises: calculating a similarity between each continuous-motion clip in the library and a part of motions in the motion sequence, and selecting k continuous-motion clips having highest similarities from the library, k being a positive integer;
wherein the description information comprises text information and audio information, and determining the set of continuous-motion clips comprises:

> acquiring a representation vector of the motion sequence of the virtual object based on the description information, wherein semantic information and motion attribute information of the motion sequence are fused in the representation vector, the semantic information is extracted from the text information, and the motion attribute information is extracted from the audio information and comprises at least one of a rhythm of a motion or a mood related to a motion of the moving object; and
> determining the set of continuous-motion clips, which are similar to at least the part of the motions in the motion sequence and which are in the library of continuous-motion clips, based on the representation vector of the motion sequence of the virtual object.

2. The method according to claim 1, further comprising: retargeting the synthesized motion sequence to the virtual object.

3. The method according to any one of claims 1 or 2, further comprising constructing the library of continuous-motion clips, wherein constructing the library of continuous-motion clips comprises:

> extracting (301) motion information, motion attribute information, and semantic information of a moving object from the video materials;
> dividing (302) the video materials into a plurality of continuous-motion clips based on the motion information of the moving object;
> converting (303), for each continuous-motion clip, the motion attribute information and the semantic information corresponding to into a corresponding representation vector; and
> storing (304), for each continuous-motion clip, the representation vector and the motion information in correspondence; and
> wherein:

>> the motion information comprises at least one of: a position, speed, or acceleration, of each motion portion of the moving object; and

the motion attribute information comprises at least one of: a rhythm of a motion or a mood related to a motion, of the moving object; and

the motion attribute information and the semantic information are extracted from audio data and text data of the video materials.

4. The method according to claim 3, further comprising: performing dimension reduction on the extracted motion information of the moving object.

5. The method according to claim 3 or 4, wherein dividing the video materials into the plurality of continuous-motion clips comprises:

determining a motion state of the moving object in each frame of the video materials; and determining, in a case that the motion state of the moving object is being stationary in at least one frame, the at least one frame as a splitting point for dividing the video materials into the plurality of continuous-motion clips.

6. The method according to any one of claims 1 to 5, wherein determining the set of continuous-motion clips comprises:

obtaining a representation vector of a first segment of a motion sequence based on the representation vector of the motion sequence of the virtual object; and obtaining a first continuous-motion clip based on the representation vector of the first segment, wherein a representation vector of the first continuous-motion clip has a first similarity to the representation vector of the first segment; wherein the first similarity is greater than or equal to a similarity between a representation vector of any other continuous-motion clip in the library of continuous-motion clips and the representation vector of the first segment.

7. The method according to claim 6, wherein the determining the set of continuous-motion clips comprises:

obtaining a representation vector of a second segment of the motion sequence based on the representation vector of the motion sequence of the virtual object, wherein the second segment is a segment of the motion sequence which is immediately subsequent to the first segment; and obtaining a second continuous-motion clip based on motion information of a plurality of tail frames of the first continuous-motion clip and the representation vector of the second segment, wherein a representation vector of the second continuous-motion clip has a second similarity to the representation vector of the second segment;

wherein the second similarity is greater than or equal to a similarity between the representation vector of any other continuous-motion clip in the library of continuous-motion clips and the representation vector of the second segment.

8. The method according to any one of claims 1 to 7, wherein synthesizing the motion sequence of the virtual object comprises:

concatenating continuous-motion clips in the set of continuous-motion clips according to a temporal order in the motion sequence of the virtual object,

wherein concatenating the continuous-motion clips comprises: fusing motion information of a plurality of tail frames of a former one of two adjacent continuous-motion clip and motion information of plurality of head frames of a latter one of the current continuous-motion clip.

9. The method according to claim 2, wherein the virtual object is any of: a virtual newscaster, a virtual game broadcaster, a virtual concierge, or a virtual shopping guide.

10. An apparatus for synthesizing a motion sequence of a virtual object, comprising:

a processor; and a memory, storing computer instructions, wherein the computer instructions when executed by the processor configure the apparatus to implement the method according to any one of claims 1 to 9.

11. A computer-readable storage medium, storing computer instructions, wherein the computer instructions when executed by a processor configure an electronic device comprising the processor to implement the method according to any one of claims 1 to 9.

**Patentansprüche**

1. Computerimplementiertes Verfahren zum Synthetisieren einer Bewegungssequenz eines virtuellen Objekts, das Folgendes umfasst

Erhalten (201) von Beschreibungsinformationen einer Bewegungssequenz eines virtuellen Objekts;

Bestimmen (202) eines Satzes von kontinuierlichen Bewegungsclips, die mindestens einem Teil von Bewegungen in der Bewegungssequenz ähnlich sind, auf Basis der Beschreibungsinformationen und einer Bibliothek von kontinuierlichen Bewegungsclips, wobei die Bibliothek mit Videomaterialien konstruiert ist; und

Synthetisieren (203) der Bewegungssequenz des virtuellen Objekts auf Basis des Satzes von kontinuierlichen Bewegungsclips;

wobei jeder kontinuierliche Bewegungsclip in der Bibliothek von kontinuierlichen Bewegungsclips eine eindeutige Kennung des kontinuierlichen Bewegungsclips, Bewegungsinformationen des kontinuierlichen Bewegungsclips und einen Repräsentationsvektor, der dem kontinuierlichen Bewegungsclip entspricht, umfasst; und

wobei das Bestimmen des Satzes von kontinuierlichen Bewegungsclips Folgendes umfasst: Berechnen einer Ähnlichkeit zwischen jedem kontinuierlichen Bewegungsclip in der Bibliothek und einem Teil von Bewegungen in der Bewegungssequenz und Auswählen von k kontinuierlichen Bewegungsclips, die größte Ähnlichkeiten aufweisen, aus der Bibliothek, wobei k eine positive Ganzzahl ist;

wobei die Beschreibungsinformationen Textinformationen und Audioinformationen umfassen und das Bestimmen des Satzes von kontinuierlichen Bewegungsclips Folgendes umfasst:

Erfassen eines Repräsentationsvektors der Bewegungssequenz des virtuellen Objekts auf Basis der Beschreibungsinformationen, wobei semantische Informationen und Bewegungsattributinformationen der Bewegungssequenz im Repräsentationsvektor verschmolzen werden, die semantischen Informationen aus den Textinformationen extrahiert werden und die Bewegungsattributinformationen aus den Audioinformationen extrahiert werden und mindestens eines von einem Rhythmus einer Bewegung oder einer Stimmung umfassen, die sich auf eine Bewegung des sich bewegenden Objekts beziehen; und

Bestimmen des Satzes von kontinuierlichen Bewegungsclips, die mindestens dem Teil der Bewegungen in der Bewegungssequenz ähnlich sind und die sich in der Bibliothek von kontinuierlichen Bewegungsclips befinden, auf Basis des Repräsentationsvektors der Bewegungssequenz des virtuellen Objekts.

2. Verfahren nach Anspruch 1, das ferner Folgendes umfasst:

erneutes Ausrichten der synthetisierten Bewegungssequenz auf das virtuelle Objekt.

3. Verfahren nach einem der Ansprüche 1 oder 2, das ferner das Konstruieren der Bibliothek von kontinuierlichen Bewegungsclips umfasst, wobei das Konstruieren der Bibliothek von kontinuierlichen Bewegungsclips Folgendes umfasst:

Extrahieren (301) von Bewegungsinformationen, Bewegungsattributinformationen und semantischen Informationen eines sich bewegenden Objekts aus den Videomaterialien;

Teilen (302) der Videomaterialien in eine Vielzahl von kontinuierlichen Bewegungsclips auf Basis der Bewegungsinformationen des sich bewegenden Objekts;

Umwandeln (303) der Bewegungsattributinformationen und der semantischen Informationen, die entsprechen, in einen entsprechenden Repräsentationsvektor für jeden kontinuierlichen Bewegungsclip; und

Speichern (304) des Repräsentationsvektors und der Bewegungsinformationen in Entsprechung für jeden kontinuierlichen Bewegungsclip; und

wobei:

die Bewegungsinformationen mindestens eines von Folgendem umfassen: einer Position, einer Geschwindigkeit oder einer Beschleunigung von jedem Bewegungsabschnitt des sich bewegenden Objekts; und die Bewegungsattributinformationen mindestens eines von Folgendem umfassen: einem Rhythmus einer Bewegung oder einer Stimmung, die sich auf eine Bewegung bezieht, des sich bewegenden Objekts; und die Bewegungsattributinformationen und die semantischen Informationen aus Audiodaten und Textdaten der Videomaterialien extrahiert werden.

4. Verfahren nach Anspruch 3, das ferner Folgendes umfasst:

Durchführen einer Dimensionsreduzierung der extrahierten Bewegungsinformationen des sich bewegenden Objekts.

5. Verfahren nach Anspruch 3 oder 4, wobei das Teilen der Videomaterialien in die Vielzahl von kontinuierlichen Bewegungsclips Folgendes umfasst:

Bestimmen eines Bewegungszustands des sich bewegenden Objekts in jedem Frame der Videomaterialien; und

in einem Fall, in dem der Bewegungszustand des sich bewegenden Objekts mindestens in einem Frame stationär ist, Bestimmen des mindestens einen Frames als einen Teilungspunkt zum Teilen der Videomaterialien in die Vielzahl von kontinuierlichen Bewegungsclips.

6. Verfahren nach einem der Ansprüche 1 bis 5, wobei das Bestimmen des Satzes von kontinuierlichen Bewegungsclips Folgendes umfasst:

Erhalten eines Repräsentationsvektors eines ersten Segments einer Bewegungssequenz auf Basis des Repräsentationsvektors der Bewegungssequenz des virtuellen Objekts; und Erhalten eines ersten kontinuierlichen Bewegungsclips auf Basis des Repräsentationsvektors des ersten Segments, wobei ein Repräsentationsvektor des ersten kontinuierlichen Bewegungsclips eine erste Ähnlichkeit mit dem Repräsentationsvektor des ersten Segments aufweist;

wobei die erste Ähnlichkeit größer als oder gleich einer Ähnlichkeit zwischen einem Repräsentationsvektor eines anderen kontinuierlichen Bewegungsclips in der Bibliothek von kontinuierlichen Bewegungsclips und dem Repräsentationsvektor des ersten Segments ist.

7. Verfahren nach Anspruch 6, wobei das Bestimmen des Satzes von kontinuierlichen Bewegungsclips Folgendes umfasst:

Erhalten eines Repräsentationsvektors eines zweiten Segments der Bewegungssequenz auf Basis des Repräsentationsvektors der Bewegungssequenz des virtuellen Objekts, wobei das zweite Segment ein Segment der Bewegungssequenz ist, das dem ersten Segment unmittelbar folgt; und Erhalten eines zweiten kontinuierlichen Bewegungsclips auf Basis von Bewegungsinformationen einer Vielzahl von Endframes des ersten kontinuierlichen Bewegungsclips und des Repräsentationsvektors des zweiten Segments, wobei ein Repräsentationsvektor des zweiten kontinuierlichen Bewegungsclips eine zweite Ähnlichkeit mit dem Repräsentationsvektor des zweiten Segments aufweist;

wobei die zweite Ähnlichkeit größer als oder gleich einer Ähnlichkeit zwischen dem Repräsentationsvektor eines anderen kontinuierlichen Bewegungsclips in der Bibliothek von kontinuierlichen Bewegungsclips und dem Repräsentationsvektor des zweiten Segments ist.

8. Verfahren nach einem der Ansprüche 1 bis 7, wobei das Synthetisieren der Bewegungssequenz des virtuellen Objekts Folgendes umfasst:

Verketten von kontinuierlichen Bewegungsclips zu dem Satz von kontinuierlichen Bewegungsclips gemäß einer zeitlichen Reihenfolge in der Bewegungssequenz des virtuellen Objekts, wobei das Verketten der kontinuierlichen Bewegungsclips Folgendes umfasst: Verschmelzen von Bewegungsinformationen einer Vielzahl von Endframes eines vorherigen von zwei benachbarten kontinuierlichen Bewegungsclips und Bewegungsinformationen einer Vielzahl von Kopfframes eines letzteren des aktuellen kontinuierlichen Bewegungsclips.

9. Verfahren nach Anspruch 2, wobei das virtuelle Objekt eines von Folgendem ist: einem virtuellen Newscaster, einem virtuellen Game-Broadcaster, einem virtuellen Concierge oder einem virtuellen Einkaufsführer.

10. Einrichtung zum Synthetisieren einer Bewegungssequenz eines virtuellen Objekts, die Folgendes umfasst:

einen Prozessor; und einen Speicher, auf dem Computeranweisungen gespeichert sind, wobei die Computeranweisungen, wenn sie vom Prozessor ausgeführt werden, die Einrichtung dazu auslegen, das Verfahren nach einem der Ansprüche 1 bis 9 zu implementieren.

11. Computerlesbares Speichermedium, auf dem Computeranweisungen gespeichert sind, wobei die Computeranweisungen, wenn sie von einem Prozessor ausgeführt werden, eine elektronische Vorrichtung, die den Prozessor umfasst, dazu auslegen, das Verfahren nach einem der Ansprüche 1 bis 9 zu implementieren.

**Revendications**

1. Procédé mis en œuvre par ordinateur pour synthétiser une séquence de mouvements d'un objet virtuel, comprenant :

l'obtention (201) d'informations de description d'une séquence de mouvements d'un objet virtuel ; la détermination (202) d'un ensemble d'extraits de mouvement continu qui sont similaires à au moins une partie des mouvements de la séquence de mouvements, sur la base des informations de description et d'une bibliothèque d'extraits de mouvement continu, la bibliothèque étant construite à partir de matériel vidéo ; et

la synthèse (203) de la séquence de mouvements de l'objet virtuel sur la base de l'ensemble d'extraits de mouvement continu ;

dans lequel chaque extrait de mouvement continu de la bibliothèque d'extraits de mouvement continu comprend un identifiant unique dudit extrait de mouvement continu, des informations de mouvement dudit extrait de mouvement continu, et un vecteur de représentation correspondant audit extrait de mouvement continu ; et

dans lequel la détermination de l'ensemble d'extraits de mouvement continu comprend : le calcul d'une similarité entre chaque extrait de mouvement continu de la bibliothèque et une partie des mouvements de la séquence de mouvements, et la sélection dans la bibliothèque de k extraits de mouvement continu ayant les similarités les plus élevées, k étant un nombre entier positif ;

dans lequel les informations de description comprennent des informations textuelles et des informations audio, et la détermination de l'ensemble d'extraits de mouvement continu comprend :

l'acquisition d'un vecteur de représentation de la séquence de mouvements de l'objet virtuel sur la base des informations de description, dans lequel des informations sémantiques et des informations d'attributs de mouvement de la séquence de mouvements sont fusionnées dans le vecteur de représentation, les informations sémantiques sont extraites des informations textuelles, et les informations d'attributs de mouvement sont extraites des informations audio et comprennent au moins un parmi un rythme d'un mouvement ou une humeur liée à un mouvement de l'objet mobile ; et

la détermination de l'ensemble d'extraits de mouvement continu qui sont similaires à au moins une partie des mouvements de la séquence de mouvements et qui se trouvent dans la bibliothèque d'extraits de mouvement continu, sur la base du vecteur de représentation de la séquence de mouvements de l'objet virtuel.

2. Procédé selon la revendication 1, comprenant en outre :
le re-ciblage de la séquence de mouvements synthétisée sur l'objet virtuel.

3. Procédé selon l'une des revendications 1 ou 2, comprenant en outre la construction de la bibliothèque d'extraits de mouvement continu, dans lequel la construction de la bibliothèque d'extraits de mouvement continu comprend :

l'extraction (301) d'informations de mouvement, d'informations d'attributs de mouvement et d'informations sémantiques d'un objet mobile à partir du matériel vidéo ;

la division (302) du matériel vidéo en une pluralité d'extraits de mouvement continu sur la base des informations de mouvement de l'objet mobile ;

pour chaque extrait de mouvement continu, la conversion (303) des informations d'attributs de mouvement et des informations sémantiques correspondantes en un vecteur de représentation correspondant ; et

pour chaque extrait de mouvement continu, le stockage (304) du vecteur de représentation et des informations de mouvement en correspondance ; et

dans lequel :

les informations de mouvement comprennent au moins une parmi : une position, une vitesse ou une accélération de chaque portion de mouvement de l'objet mobile ; et

les informations d'attributs de mouvement comprennent au moins un parmi : un rythme d'un mouvement ou une humeur liée à un mouvement de l'objet mobile ; et

les informations d'attributs de mouvement et les informations sémantiques sont extraites de données audio et de données textuelles du matériel vidéo.

4. Procédé selon la revendication 3, comprenant en outre :
la réalisation d'une réduction de dimension sur les informations de mouvement extraites de l'objet mobile.

5. Procédé selon la revendication 3 ou 4, dans lequel la division du matériel vidéo en la pluralité d'extraits de mouvement continu comprend :

la détermination d'un état de mouvement de l'objet mobile dans chaque trame du matériel vidéo ; et

dans le cas où l'état de mouvement de l'objet mobile est immobile dans au moins une trame, la détermination de l'au moins une trame comme point de séparation pour la division du matériel vidéo en la pluralité d'extraits de mouvement continu.

6. Procédé selon l'une des revendications 1 à 5, dans lequel la détermination de l'ensemble d'extraits de mouvement continu comprend :

l'obtention d'un vecteur de représentation d'un premier segment d'une séquence de mouvements sur la base du vecteur de représentation de la séquence de mouvements de l'objet virtuel ; et

l'obtention d'un premier extrait de mouvement continu sur la base du vecteur de représentation du premier segment, dans lequel un vecteur de représentation du premier extrait de mouvement continu a une première similarité avec le vecteur de représentation du premier segment ; dans lequel la première similarité est supérieure ou égale à une similarité entre un vecteur de représentation de tout autre extrait de mouvement continu de la bibliothèque d'extraits de mouvement continu et le vecteur de représentation du premier segment.

7. Procédé selon la revendication 6, dans lequel la détermination de l'ensemble d'extraits de mouvement continu comprend :

l'obtention d'un vecteur de représentation d'un deuxième segment de la séquence de mouvements sur la base du vecteur de représentation de la séquence de mouvements de l'objet virtuel, dans lequel le deuxième segment est un segment de la séquence de mouvements qui suit immédiatement le premier segment ; et l'obtention d'un deuxième extrait de mouvement continu sur la base d'informations de mouvement d'une pluralité de trames de queue du premier extrait de mouvement continu et du vecteur de représentation du deuxième segment, dans lequel un vecteur de représentation du deuxième extrait de mouvement continu a une deuxième similarité avec le vecteur de représentation du deuxième segment ; dans lequel la deuxième similarité est supérieure ou égale à une similarité entre le vecteur de représentation de tout autre extrait de mouvement continu de la bibliothèque d'extraits de mouvement continu et le vecteur de représentation du deuxième segment.

8. Procédé selon l'une des revendications 1 à 7, dans lequel la synthèse de la séquence de mouvements de l'objet virtuel comprend :

la concaténation d'extraits de mouvement continu de l'ensemble d'extraits de mouvement continu selon un ordre temporel dans la séquence de mouvements de l'objet virtuel, dans lequel la concaténation des extraits de mouvement continu comprend : la fusion d'informations de mouvement d'une pluralité de trames de queue d'un premier de deux extraits de mouvement continu adjacents et d'informations de mouvement d'une pluralité de trames de tête d'un dernier des extraits de mouvement continu courants.

9. Procédé selon la revendication 2, dans lequel l'objet virtuel est l'un quelconque parmi : un présentateur virtuel, un diffuseur de jeu virtuel, un concierge virtuel ou un guide d'achat virtuel.

10. Appareil pour synthétiser une séquence de mouvements d'un objet virtuel, comprenant :

un processeur ; et une mémoire stockant des instructions informatiques, dans lequel les instructions informatiques, lorsqu'elles sont exécutées par le processeur, configurent l'appareil pour mettre en œuvre le procédé selon l'une des revendications 1 à 9.

11. Support de stockage lisible par ordinateur stockant des instructions informatiques, dans lequel les instructions informatiques, lorsqu'elles sont exécutées par un processeur, configurent un dispositif électronique comprenant le processeur pour mettre en œuvre le procédé selon l'une des revendications 1 à 9.

100

First frame

Second frame

Figure 1

200

201 — Obtain description information of a motion sequence of a virtual object

202 — Determine a set of continuous-motion clips, which are similar to at least a part of motions in the motion sequence, based on the description information and a library of continuous-motion clips

203 — Synthesize the motion sequence of the virtual object based on the set of continuous-motion clips

Figure 2A

200

Library 210 of
continuous-motion clips ⟶

David swings
his two arms
after walking
for a while...

Description
information 220

230

"Walking" 231

"Swing arms" 232

⋮

Motion
sequence 240

Animation 250
of virtual object

Figure 2B

2000

| Processor | ⌐ 2001 | | Memory | ⌐ 2002 |

⌐ 2003

Figure 2C

300

301 — Extract motion information, motion attribute information, and semantic information of a moving object from the video materials

302 — Divide the video materials into multiple continuous-motion clips based on the motion information of the moving object

303 — Convert the motion attribute information and the semantic information corresponding to each continuous-motion clip into a representation vector corresponding to such continuous-motion clip

304 — Store the representation vector corresponding to each continuous-motion clip and motion information of such motion clip in correspondence

Figure 3A

Video library 310  →  Library 210 of continuous-motion clips

— Video material ID

— Music

— Line

— Subtitle

— Video file

— <Representation vector, motion information>

Figure 3B

Motion sequence of virtual object

| First segment of motion sequence | Second segment of motion sequence | |
|---|---|---|

First continuous-motion clip

Second continuous-motion clip

Third continuous-motion clip

Figure 4

500

501 — Obtain text information or audio information describing a motion sequence of a virtual object

502 — Retarget the motion sequence of the virtual object to the virtual object based on the text information or the audio information, to output a video of a motion of the virtual object

Figure 5

2000

601 — Motion-sequence obtaining module

602 — Similar-motion-clip obtaining module

603 — Motion synthesis module

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010142920

- US 2004246255 A1

**Non-patent literature cited in the description**

- **MASAKI OSHITA**. Generating Animation from Natural Language Texts and Framework of Motion Database. *2009 International Conference on Cyber Worlds*